# EUROPÄISCHE PATENTSCHRIFT

(11) **EP 2 171 325 B1**
(45) Veröffentlichungstag und Bekanntmachung des Hinweises auf die Patenterteilung: **14.09.2011**
(21) Anmeldenummer: 08774717.6
(22) Anmeldetag: 03.07.2008
(51) Int. Cl.: F16K 11/08

(54) **EINSTELLVORRICHTUNG**
ADJUSTING DEVICE
DISPOSITIF DE RÉGLAGE

(30) Priorität: 13.07.2007 EP 07360032
(43) Veröffentlichungstag der Anmeldung: 07.04.2010
(73) Patentinhaber: BSH Bosch und Siemens Hausgeräte GmbH, 81739 München (DE)
(72) Erfinder: CADEAU, Christophe, F-67100 Strasbourg (FR); CLAUSS, Stéphane, F-67640 Lipsheim (FR); MASTIO, Emmanuel, F-31450 Fourquevaux (FR); NAUMANN, Jörn, 77770 Durbach (DE)
(74) Vertreter: Lang, Michael
(86) Internationale Anmeldenummer: PCT/EP2008/058605
(87) Internationale Veröffentlichungsnummer: WO 2009/010400

(56) Entgegenhaltungen:
- US-A- 3 884 413
- US-A1- 2004 148 694
- US-B1- 6 182 697

## Beschreibung

Die Erfindung geht aus von einer Einstellvorrichtung, insbesondere einer Gashahnvorrichtung, zur Einstellung eines Durchflusses eines fließfähigen Stoffs nach dem Oberbegriff des Anspruchs 1.

Aus der US 3,884,413 ist eine Ventilanordnung für eine Gasofen und Gasbrennerkombination bekannt welche ermöglicht, mit einem einzelnen Bedienelement sowohl ein Thermostatventil wie auch ein manuelles Ventil für eine Gaszufuhr zu bedienen. Das Bedienelement lässt Positionen zu, in denen eine Gaszufuhr zu allen Zündbrennern abgesperrt ist, eine Position, in der nur ein Gasbrenner einer Kochstelle mit Gas versorgt ist, und eine Position, in der die Gasbrenner des Ofens sowie der Kochstelle mit Gas versorgt werden. Dazu ist ein Steckventil vorgesehen, das verschiedene Durchstromkonfigurationen zwischen Eingangs- und Ausgangsanschlüssen für Gas ermöglicht.

In der US 6,182,697 B1 ist eine Verteilungsventilanordnung für eine Hydraulikanlage beschrieben. Dabei ermöglichen ineinander gesteckte Ventilhülsen mit Durchgangsöffnungen verschiedene Strömungspfade von und zu Anschlussstutzen der Ventilanordnung.

In der US 2004/0148694 ist eine Wannenanordnung für die Hydrotherapie beschrieben, welche in einer Wanne Düsen für Wasser-Luft-Gemische hat. Eine Steuer- und Verteileinrichtung dient dazu, von einem Wasseranschluss aus die Einströmdüsen einzeln oder in Kombination miteinander mit dem Wasser-Luft-Gemisch zu versorgen.

Es ist aus der EP 1 582 790 A1 eine Einstellvorrichtung für einen Gashahn bekannt. Diese weist einen Flansch auf, welcher mit einem Satz von Bohrungen zum Durchfließen von Gas versehen ist. Es ist ferner eine relativ zum Flansch drehbar gelagerte Scheibe vorgesehen, die eine Ausnehmung aufweist. Mittels einer Rotation der Scheibe und des Zusammenwirkens der Scheibenausnehmung und der Flanschbohrungen können unterschiedliche Gasdurchflüsse eingestellt werden. Hierbei werden die Flanschbohrungen mittels der Scheibenausnehmung in Kombinationen miteinander und sukzessiv freigegeben.

Die Aufgabe der Erfindung besteht insbesondere darin, eine gattungsgemäße Einstellvorrichtung bereitzustellen, bei welcher konstruktiv einfach eine hohe Flexibilität in der Einstellung eines Durchflusses eines fließfähigen Stoffs erreicht werden kann.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Einstellvorrichtung, insbesondere einer Gashahnvorrichtung, zur Einstellung eines Durchflusses eines fließfähigen Stoffs, mit einer Kanaleinheit, die zumindest zwei Kanäle zum Durchfließen des Stoffs aufweist, und einem relativ zur Kanaleinheit beweglich gelagerten Grundkörper, der dazu dient, zur Bereitstellung einer Durchflussstufe die Kanäle in Kombination anzusteuern.

Es wird vorgeschlagen, dass der Grundkörper eine Einstelleinheit aufweist, die dazu vorgesehen ist, zumindest zwei Kanäle jeweils einzeln zur Bereitstellung jeweils einer Durchflussstufe anzusteuern. Dadurch kann auf eine konstruktiv einfache Weise eine hohe Anzahl an einstellbaren Durchflussstufen erreicht werden, wobei eine hohe Flexibilität in der Anwendung der Einstellvorrichtung erzielt werden kann. Dies ist bei dem Einsatz der Erfindung bei Gaskochvorrichtungen besonders vorteilhaft, wobei eine hohe Anzahl an verschiedenen Kochstufen und dadurch ein hoher Anwendungskomfort erreicht werden können. Ein Umschalten zwischen unterschiedlichen Durchflussstufen erfolgt zweckmäßigerweise mittels einer Bewegung des Grundkörpers relativ zur Kanaleinheit. Der Grundkörper ist vorzugsweise als ein einstückiges Bauteil ausgeführt. Unter einem "Ansteuern" eines Kanals kann in diesem Zusammenhang insbesondere ein Freigeben des Kanals verstanden werden. Mittels eines "einzelnen" Ansteuerns der Kanäle kann eine Kanalkonfiguration erreicht werden, in der eine Durchflussstufe durch die Freigabe eines der Kanäle gegeben ist, während der andere Kanal sich in einem gesperrten Zustand befindet bzw. in diesen gesperrten Zustand verstellt wird. Dabei wird die Durchflussstufe durch ein Merkmal eines einzelnen Kanals, wie insbesondere eine Durchlassöffnung, festgelegt. Daher ist von Vorteil, wenn die einzeln ansteuerbaren Kanäle in zumindest einem Teilbereich mit einer verschiedenen Durchlassöffnung versehen sind. Unter einer "Durchftussstufe" kann in diesem Zusammenhang insbesondere ein fester Wert des Stoffdurchflusses verstanden werden, der einem Bewegungsbereich, insbesondere einem bestimmten Intervall eines Wegparameters des Grundkörpers, zugeordnet ist. In einer Kennlinie des Durchflusses als Funktion des Wegparameters ist dabei der Wert, welcher der Durchflussstufe entspricht, innerhalb dieses Intervalls zumindest im Wesentlichen konstant. Sind mehrere Durchflussstufen einstellbar, so weist die Kennlinie als Funktion des Wegparameters stufenförmige Bereiche auf, die jeweils einem festen Durchflusswert entsprechen. Der Grundkörper kann hierbei dazu dienen, zwischen den unterschiedlichen Durchflussstufen stufenweise umzuschalten, wodurch diese unterschiedlichen Durchflussstufen für einen Bediener der Einstellvorrichtung deutlich wahrnehmbar sind. Ferner entsprechen die unterschiedlichen Durchflussstufen vorzugsweise Konfigurationen der Kanaleinheit, die jeweils vollständig freigegebenen oder vollständig gesperrten Kanälen entsprechen. Durch die Ansteuerung von diesen diskreten Kanalzuständen ("Kanal auf" und "Kanal zu") können feste, genaue und reproduzierbare Durchflussstufen erreicht werden, wobei ein besonders hoher Bedienkomfort erzielt werden kann. Die Kanäle der Kanaleinheit sind vorzugsweise als ausflussseitige Kanäle ausgebildet. Hierzu sind die Kanäle im Verlauf des Stoffs durch die Einstellvorrichtung zu einem Stoffverbraucher vorteilhafterweise zwischen dem Grundkörper und einer Stoffausflussstelle der Einstellvorrichtung angeordnet, durch welche der Stoff aus der Einstellvorrichtung herausfließt.

Die Kanäle, die mittels der Einstelleinheit jeweils einzeln angesteuert werden können, können von den Kanälen, die in Kombination ansteuerbar sind, verschieden sein. Um Bauteile zu sparen, sind die einzeln steuerbaren Kanäle vorzugsweise zumindest teilweise einstückig mit den Kanälen, die in Kombination ansteuerbar sind, ausgebildet. Besonders vorteilhaft weist die Kanaleinheit einen ersten Kanal und zumindest einen zweiten Kanal auf, und die Einstelleinheit ist vorteilhafterweise dazu vorgesehen, den ersten und den zweiten Kanal jeweils einzeln und in Kombination anzusteuern. Dadurch kann die Einstelleinheit im Zusammenwirken mit dem ersten und mit dem zweiten Kanal dazu dienen, zwischen drei positiven Durchflussstufen zumindest im Wesentlichen stufenweise umzuschalten. Allgemein kann bei einer bestimmten Anzahl von in Kombination und jeweils einzeln ansteuerbaren Kanälen eine Anzahl von Durchflussstufen erreicht werden, die größer ist als die Anzahl der Kanäle.

In einer bevorzugten Ausführung der Erfindung wird vorgeschlagen, dass die Kanaleinheit einen Satz von zumindest vier Kanälen aufweist und die Einstelleinheit im Zusammenwirken mit der Kanaleinheit dazu vorgesehen ist, zumindest sechs positive Durchflussstufen bereitzustellen, wodurch eine besonders hohe Anwendungsflexibilität erreicht werden kann. Unter einer "positiven Durchflussstufe" kann in diesem Zusammenhang eine Durchflussstufe verstanden werden, die einem Durchflusswert entspricht, welcher von Null verschieden ist.

Außerdem wird vorgeschlagen, dass der Grundkörper hülsenförmig ausgebildet ist, wodurch eine konstruktiv einfache und kompakte Ausführung der Einstellvorrichtung erreicht werden kann. In dieser Ausführung kann der Stoff vorteilhafterweise durch einen vom hülsenförmigen Grundkörper gebildeten Hohlraum fließen.

Eine einfache und Material sparende Ausführung der Einstelleinheit kann erreicht werden, wenn diese zumindest einen Ausnehmungssatz aufweist, der mehrere in Hülsenumfangsrichtung einander folgende Ausnehmungen umfasst, die aus dem Grundkörper ausgespart sind. Die Ausnehmungen sind vorteilhafterweise dazu ausgelegt, dass bei einem Umschalten zwischen zwei Durehflussstufen Kanäle vollständig gesperrt bzw. freigegeben werden. Zweckmäßigerweise sind die Ausnehmungen aus einem eine Mittelachse des hülsenförmigen Grundkörpers umhüllenden Schalenbereich des Grundkörpers ausgespart.

Es kann eine parallele Ansteuerung von verschiedenen Kanälen erreicht werden, wenn die Einstelleinheit mehrere Ausnehmungssätze aufweist, die jeweils einem Kanal der Kanaleinheit zugeordnet sind. Insbesondere kann einer gegebenen Bewegungsstrecke des Grundkörpers eine große Anzahl von Kanalkonfigurationen bzw. Durchflussstufen zugeordnet werden.

Dies kann konstruktiv einfach erreicht werden, wenn der Grundkörper zumindest zwei Ausnehmungssätze aufweist, die in Hülsenaxialrichtung hintereinander angeordnet sind.

Des Weiteren wird vorgeschlagen, dass der Grundkörper zwischen einer Ausschaltposition und zumindest einer einen Durchfluss zulassenden Position drehbar gelagert ist, die einen Winkel von zumindest 270° bilden. Dadurch können ein großer Einstellbereich und ein hoher Bedienkomfort erreicht werden. Dies ist bei dem Einsatz der Einstellvorrichtung zum Einstellen des Durchflusses eines Flüssiggases besonders vorteilhaft. Unter einer "Ausschaltposition" kann in diesem Zusammenhang insbesondere jeweils eine Position des Grundkörpers relativ zur Kanaleinheit verstanden werden, die einem Nulldurchfluss entspricht.

Vorteilhafterweise ist der Grundkörper zwischen einer ersten, einer maximalen Durchflussstufe entsprechenden Position und einer zweiten, einer minimalen Durchflussstufe entsprechenden Position drehbar gelagert, die einen Drehwinkelbereich von zumindest 200° bilden. Dadurch können zu unterschiedlichen Durchflussstufen des Grundkörpers zwischen der maximalen Stufe und der minimalen Stufe bestimmte Positionen des Grundkörpers innerhalb des Drehwinkelbereichs mit einer hohen Flexibilität zugeordnet werden, die gezielt auf eine effektive und komfortable Anwendung der Einstellvorrichtung abgestimmt sind. Beispielweise können die Einstellwege des Grundkörpers, die jeweils einer Durchflussstufe entsprechen und innerhalb welcher der Durchflusswert konstant ist, derart gewählt werden, dass ein deutliches Unterscheiden zwischen den verschiedenen Durchflussstufen für einen Bediener erreicht werden kann. Die Durchflussstufen können für einen Bediener besonders deutlich wahrnehmbar sein, wenn eine Durchflussstufe durchschnittlich einem Winkelbereich von zumindest 25° entspricht.

Es kann bei der Herstellung der Einstellvorrichtung ein geringer Konstruktionsaufwand erreicht werden, wenn diese einen zur Aufnahme des Grundkörpers vorgesehenen Aufnahmebereich aufweist, der zumindest teilweise einstückig mit der Kanaleinheit ausgebildet ist.

Ferner wird vorgeschlagen, dass die Einstellvorrichtung eine Düseneinheit zum Festlegen zumindest einer Durchfließöffnung für den Stoff aufweist, die als eine auswechselbare, von der Kanaleinheit trennbare Einheit ausgebildet ist. Dadurch kann die Einstellvorrichtung für verschiedene Stofftypen einfach eingesetzt werden, ohne aufwändige Änderungen der Kanaleinheit vornehmen zu müssen. Mittels der Durchfließöffnung der Düseneinheit kann eine Durchflussstufe eindeutig festgelegt werden. Die Durchfließöffnung ist vorteilhafterweise dazu vorgesehen, einen Durchfluss des Stoffs in einem Kanal festzulegen. Hierzu wird die Durchfließöffnung vorzugsweise zumindest von einem Teilbereich der Düseneinheit gebildet, der im Kanal angeordnet ist. Die Düseneinheit kann vorteilhaft in einem Kanal der Kanaleinheit aufgenommen sein.

Die Anzahl der Bauteile kann ferner reduziert werden, wenn die Einstellvorrichtung eine einstückige Düseneinheit aufweist, die zum Festlegen zumindest einer Durchfließöffnung für den Stoff in zumindest zwei Kanälen vorgesehen ist. Beispielsweise kann die Düseneinheit die Kanäle überqueren.

Ferner wird vorgeschlagen, dass die Einstellvorrichtung eine Düseneinheit zum Festlegen zumindest einer Durchfließöffnung für den Stoff aufweist, die eine Anpassungseinheit umfasst, welche dazu vorgesehen ist, eine Durchfließöffnung für den Stoff in zumindest einem der Kanäle zu ändern. Dadurch kann eine vorteilhafte und einfache Anpassung der Einstellvorrichtung an unterschiedliche Stofftypen mit einem geringen Aufwand erreicht werden.

Vorzugsweise weist die Einstellvorrichtung zumindest eine Schnittstelle auf, die zur Kopplung mit einem Bedienelement zur manuellen Betätigung vorgesehen ist. Dadurch kann die erfindungsgemäße Einstellvorrichtung bei bestehenden Verbrauchern, wie z.B. Gaskochvorrichtungen, eingesetzt werden, ohne dass diese Verbraucher gezielt auf die Einstellvorrichtung angepasst werden müssen. Das Bedienelement kann ferner Teil der Einstellvorrichtung sein. Die Schnittstelle kann außerdem mit einem motorischen Antrieb zur Betätigung des Grundkörpers ausgestattet werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Frontansicht eines Gashahns,
- Fig. 2: eine Schnittansicht durch eine Gaseinstellvorrichtung des Gas- hahns aus Figur 1 mit Durchflusskanälen,
- Fig. 3: eine schematische Darstellung des Funktionsprinzips der Gasein- stellvorrichtung,
- Fig. 4: einen Rotationskörper der Gaseinstellvorrichtung mit Ausneh- mungssätzen zur Ansteuerung der unterschiedlichen Kanäle,
- Fig. 5: eine zweidimensionale Darstellung der Ausnehmungssätze des Rotationskörpers aus Figur 4,
- Fig. 6: eine perspektivische Ansicht eines Körpers zum Festlegen von Durchfließöffnungen in den Durchflusskanälen,
- Fig. 7: unterschiedliche Konfigurationen der Durchflusskanäle als Funkti- on eines Drehwinkels des Rotationskörpers,
- Fig. 8: eine Kennlinie des Gasdurchflusses als Funktion eines Einstell- wegs des Rotationskörpers,
- Fig. 9: eine alternative Ausführung einer Gaseinstellvorrichtung mit An- passungseinheiten zum Anpassen der Gaseinstellvorrichtung an unterschiedliche Gastypen und
- Fig. 10: die Gaseinstellvorrichtung aus Figur 9 in einer weiteren Schnittan- sicht.

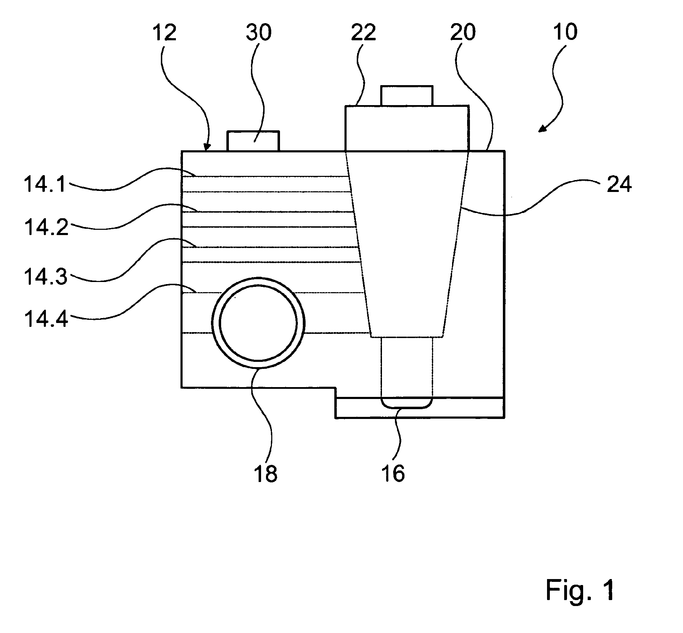

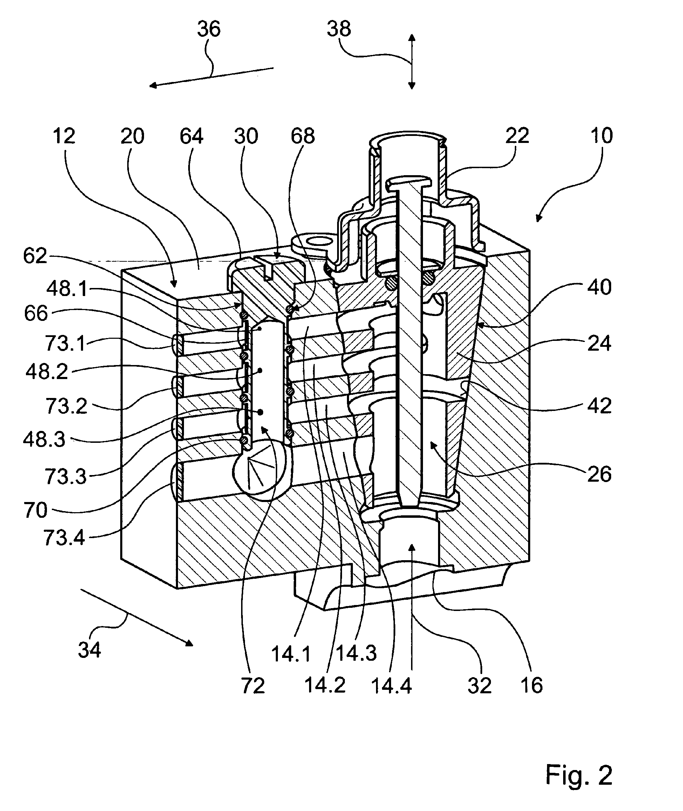

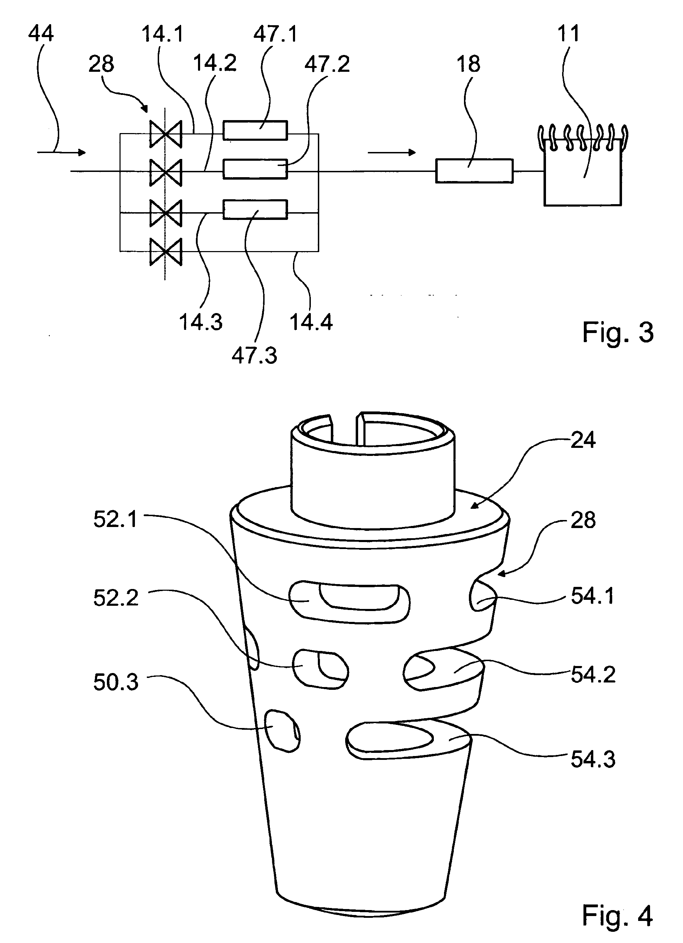

Figur 1 zeigt eine als Gashahnvorrichtung ausgebildete Einstellvorrichtung 10 in einer Seitenansicht. Die Einstellvorrichtung 10 ist zur Bereitstellung eines Gasdurchflusses für einen Verbraucher 11 (Figur 3), insbesondere einen Brenner einer Gaskochvorrichtung, vorgesehen. Die Einstellvorrichtung 10 weist eine Kanaleinheit 12 auf, die im Wesentlichen quaderförmig ausgebildet ist und in welcher Kanäle 14.1 bis 14.4 zum Durchfließen von Gas angeordnet sind (siehe auch Figur 2). An die Kanaleinheit 12 angeformt sind eine Einlassöffnung 16 zum Hineinfließen von Gas in die Einstellvorrichtung 10 und eine Auslassöffnung 18 zum Herausfließen von Gas zum Verbraucher 11. An einer oberen, bei einer Anwendung einem Bediener zugewandten Seite 20 der Kanaleinheit 12 ist ein Führungselement 22 angeordnet, welches ein Einstellelement (nicht dargestellt) zur manuellen Einstellung eines Gasdurchflusses aufnimmt. Die Einstellvorrichtung 10 weist ferner einen einstückig und konusförmig ausgebildeten Grundkörper 24 auf. Der Grundkörper 24 ist relativ zur Kanaleinheit 12 drehbar gelagert. Er ist außerdem hülsenförmig ausgebildet und bildet einen Hohlraum 26, über welchen Gas von der Einlassöffnung 16 über die Kanäle 14 zur Auslassöffnung 18 fließen kann (siehe Figur 2). Der Grundkörper 24 ist ferner mit einer in den nächsten Figuren näher dargestellten Einstelleinheit 28 versehen, die eine stufenweise Einstellung des Gasdurchflusses mittels einer Drehbewegung des Grundkörpers 24 ermöglicht. Die Einstellvorrichtung 10 umfasst ferner eine anhand von Figur 2 näher beschriebene Düseneinheit 30, die aus der Seite 20 der Kanaleinheit 12 herausragt.

Eine Schnittansicht der Einstellvorrichtung 10 aus Figur 1 ist in Figur 2 dargestellt. Es sind die Kanaleinheit 12 mit der Einlassöffnung 16 und der Grundkörper 24 zu erkennen. Bei einer Anwendung fließt das Gas in einer Einlassrichtung 32 in die Einstellvorrichtung 10 und fließt über den Hohlraum 26 des Grundkörpers 24 und die Kanäle 14 zur Auslassöffnung 18 (Figur 1). Das Gas fließt aus der Einstellvorrichtung 10 über die Auslassöffnung 18 in einer Auslassrichtung 34, die senkrecht zur Einlassrichtung 32 steht. Aus der Kanaleinheit 12 sind die Kanäle 14.1, 14.2, 14.3, 14.4 ausgeformt, welche sich parallel zueinander und zur Haupterstreckungsrichtung der quaderförmigen Kanaleinheit 12 in einer Kanalrichtung 36 erstrecken und jeweils einen runden Querschnitt aufweisen. Die Kanalrichtung 36 ist senkrecht zur Einlassrichtung 32 und zur Auslassrichtung 34 ausgerichtet. Der Kanal 14.4 ist als Hauptkanal oder Vollbrandkanal ausgebildet. Die drei anderen Kanäle 14.1, 14.2, 14.3 sind als Nebenkanäle oder Bypasskanäle ausgeführt und weisen einen gleichen Durchmesser auf, welcher kleiner als der Durchmesser des Kanals 14.4 ausgebildet ist.

Der hülsenförmige Grundkörper 24 bildet den Hohlraum 26 und weist eine Hülsenaxialrichtung 38 auf, die parallel zur Einlassrichtung 32 ausgerichtet ist. Der Grundkörper 24 ist in einem aus der Kanaleinheit 12 ausgeformten und konisch ausgebildeten Aufnahmebereich 40 aufgenommen. Im aufgenommenen Zustand des Grundkörpers 24 ist dieser zu einer Rotation um die Hülsenaxialrichtung 38 drehbar, welche senkrecht zur Kanalrichtung 36 steht. Der Aufnahmebereich 40 ist durch eine Innenwandung 42 der Kanaleinheit 12 räumtich begrenzt, an welcher der Grundkörper 24 im montierten Zustand anliegt und auf welcher er bei einer Drehung gleitet.

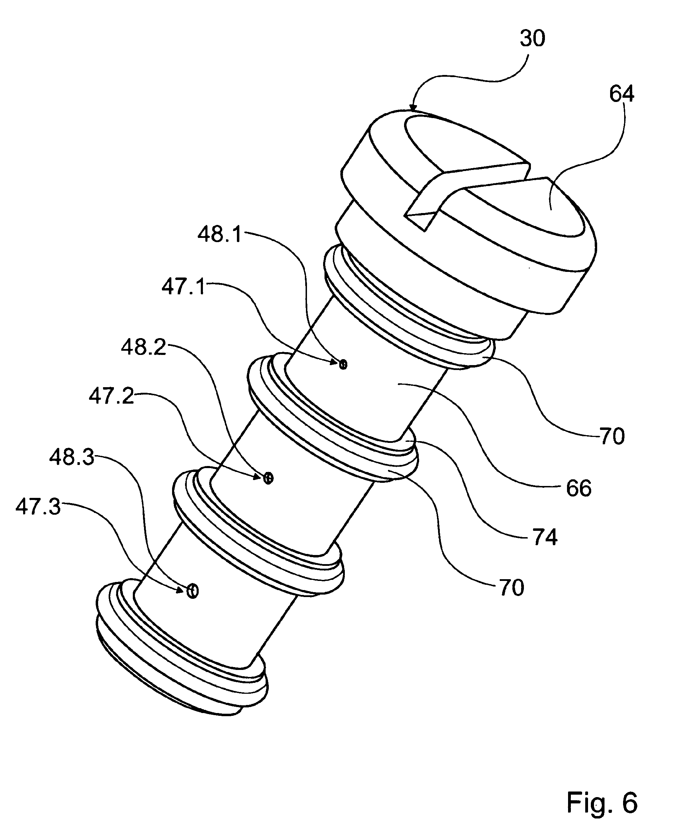

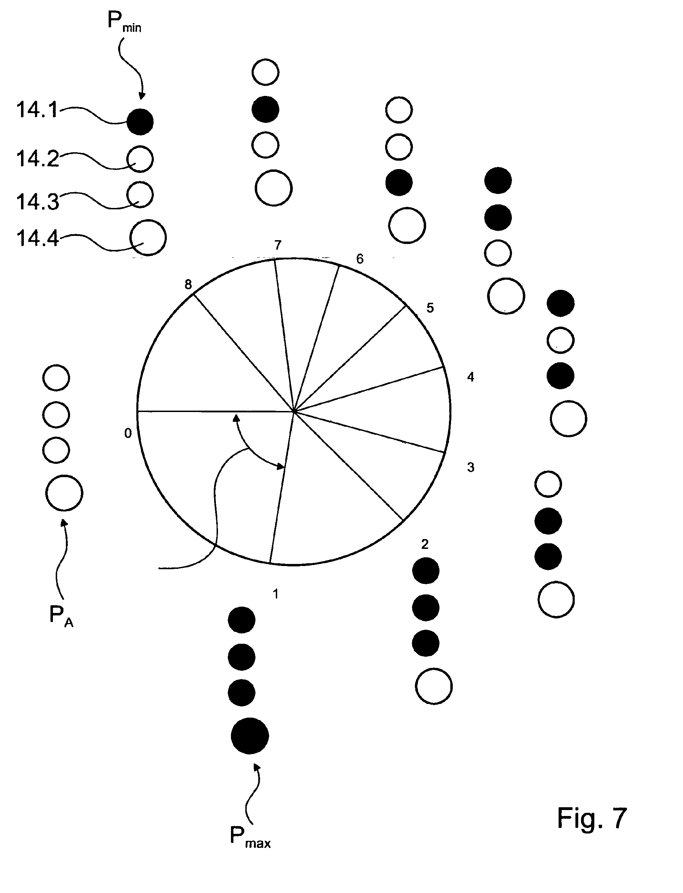

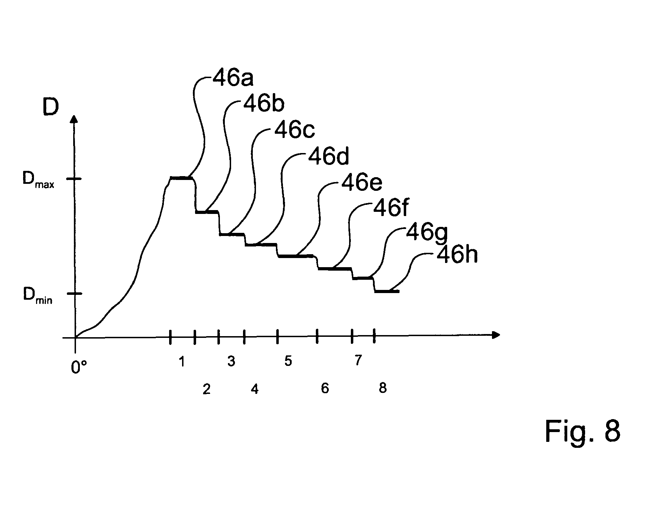

Das Funktionsprinzip der Einstellvorrichtung 10 aus Figur 2 wird anhand der schematischen Darstellung in Figur 3 erläutert. Ein Gasstrom 44, welcher durch die Einlassöffnung 16 und den vom Grundkörper 24 gebildeten Hohlraum 26 fließt, kann in vier verschiedenen Leitungen abgeleitet werden, wobei eine Leitung in der Darstellung jeweils einem Kanal 14 der Kanaleinheit 12 entspricht. Die Einstellvorrichtung 10 weist die als Ventileinheit ausgebildete Einstelleinheit 28 auf, die dazu dient, die Kanäle 14 der Kanaleinheit 12 anzusteuern. Mithilfe der Einstelleinheit 28 können die Kanäle 14 jeweils zwischen zwei diskreten Zuständen angesteuert werden, und zwar einem ersten Zustand, in welchem der jeweilige Kanal 14 vollständig freigegeben ist, und einem zweiten Zustand, in welchem der jeweilige Kanal 14 vollständig gesperrt ist. Zur Bereitstellung von verschiedenen Durchflussstufen 46, die in Figur 8 dargestellt sind, kann die Einstelleinheit 28 die Kanäle 14 in Kombination und/oder jeweils einzeln ansteuern, was anhand von Figur 7 näher erläutert wird. Der als Hauptkanal ausgebildete Kanal 14.4, der der unteren Leitung entspricht, ist mit der Auslassöffnung 18 der Einstellvorrichtung 10 direkt verbunden. In den als Bypasskanäle ausgebildeten Kanälen 14.1, 14.2, 14.3, die den übrigen Leitungen entsprechen, ist jeweils ein Durchlassmittel 47.1, 47.2, 47.3 aufgenommen, das dazu dient, einen Gasdurchfluss im entsprechenden Kanal 14 festzulegen. Hierzu bilden die Durchlassmittel 47 jeweils eine Durchfließöffnung 48 zum Fließen von Gas (siehe Figuren 2 und 6). Die Durchfließöffnungen 48.1, 48.2, 48.3 weisen jeweils einen unterschiedlichen Durchmesser auf, wodurch in den verschiedenen Kanälen 14 bei deren Freigabe unterschiedliche Gasmengen pro Zeiteinheit fließen können. Die vier Leitungen vereinigen sich nach dem Durchlass der Gasströme durch die Durchlassmittel 47 in einer gemeinsamen Leitung, die das Gas zur Auslassöffnung 18 führt, welche an den Verbraucher 11 angeschlossen ist.

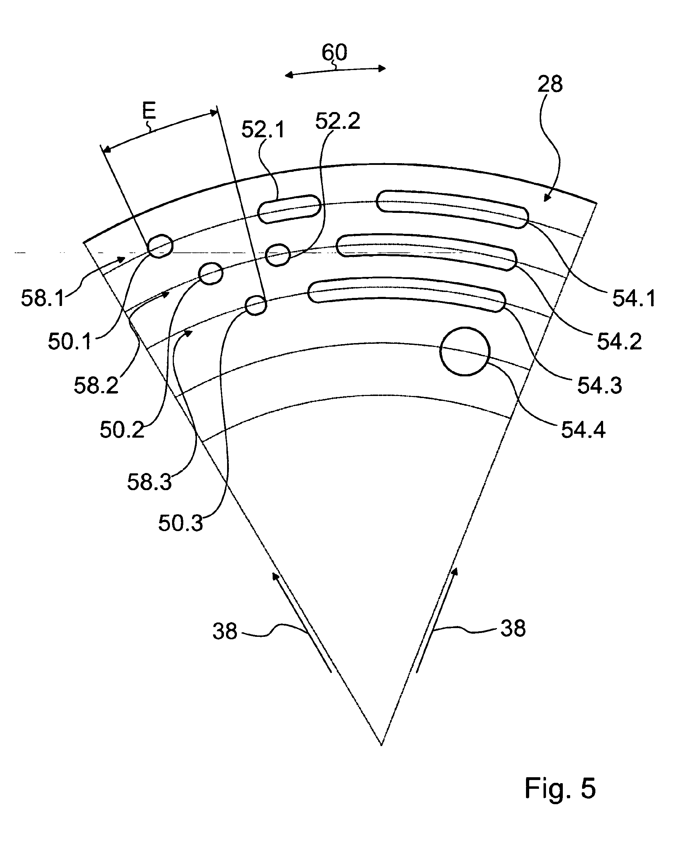

Die anhand von Figur 3 schematisch und abstrakt beschriebene Einstelleinheit 28 ist einstückig mit dem Grundkörper 24 ausgeführt. Die Einstelleinheit 28 entspricht einem Satz von Ausnehmungen 50, 52, 54, die aus der Wandung des hülsenförmigen Grundkörpers 24 ausgespart sind. Dies ist in den Figuren 4 und 5 näher dargestellt. Figur 4 zeigt den Grundkörper 24 in einer perspektivischen Ansicht. Die verschiedenen Ausnehmungen 50, 52, 54 des Grundkörpers 24 sind der Klarheit halber in einer zweidimensionalen Darstellung in Figur 5 gezeigt. Der Satz von Ausnehmungen umfasst drei Ausnehmungssätze 58.1, 58.2, 58.3 und die Ausnehmung 54.4, wobei ein Ausnehmungssatz 58 jeweils einem der als Bypasskanäle ausgebildeten Kanäle 14.1, 14.2, 14.3 zugeordnet ist und die Ausnehmung 54.4 dem als Hauptkanal ausgebildeten Kanal 14.4 zugeordnet ist. Dies ist einer Zusammenschau der Figuren 2, 4 und 5 zu entnehmen. Die Ausnehmungssätze 58 weisen jeweils mehrere Ausnehmungen auf, die in Hülsenumfangsrichtung 60 des hülsenförmigen Grundkörpers 24 einander folgen (Figuren 4 und 5). Der Ausnehmungssatz 58.1 weist eine kreisförmige Ausnehmung 50.1 und zwei längliche Ausnehmungen 52.1, 54.1 auf. Der Ausnehmungssatz 58.2 umfasst zwei kreisförmige Ausnehmungen 50.2, 52.2 und eine längliche Ausnehmung 54.3. Der Ausnehmungssatz 58.3 weist eine kreisförmige Ausnehmung 50.3 und eine längliche Ausnehmung 52.3 auf. Außerdem sind die Ausnehmungssätze 58, den verschiedenen Kanälen 14 entsprechend, in Hülsenaxialrichtung 38 des Grundkörpers 24 hintereinander angeordnet.

Die verschiedenen Dimensionen der Ausnehmungen 50, 52, 54 und die Anordnung der Ausnehmungen 50, 52, 54 relativ zueinander sind derart gewählt, dass die Kanäle 14 in Kombination und jeweils einzeln ansteuerbar sind. Insbesondere können die als Bypasskanäle ausgebildeten Kanäle 14.1, 14.2, 14.3 jeweils einzeln mittels der Ausnehmungen 50.1, 50.2, 50.3 freigegeben werden. Die Dimension dieser Ausnehmungen 50.1, 50.2, 50.3 sowie die relative Anordnung der Ausnehmungen 50.1, 50.2, 50.3 zueinander sind so gewählt, dass innerhalb eines Drehwinkelbereichs E des Grundkörpers 24 drei Kanalkonfigurationen erreicht werden, in denen jeweils ein einziger Kanal 14 freigegeben ist. Hierzu sind die Ausnehmungen 50.1, 50.2, 50.3 in Hülsenumfangsrichtung 60 zueinander versetzt, so dass diese sich nicht überlappen. Um zu einer Kombination von Kanälen 14 zu gelangen, sind längliche Ausnehmungen 52.1, 54.1, 54.2, 54.3 vorgesehen, die in deren Haupterstreckungsrichtung, d.h. in Hülsenumfangsrichtung 60 des Grundkörpers 24, eine Länge aufweisen, die vorzugsweise ein Vielfaches der Erstreckung in Hülsenumfangsrichtung 60 der kreisförmigen Ausnehmungen 50.1, 50.2, 50.3 beträgt. Beispielsweise kann durch die Ausnehmungen 52.1, 54.3 eine Kanalkonfiguration erreicht werden, in der der Kanal 14.1 freigegeben bleibt, während der Kanal 14.2 gesperrt wird und der Kanal 14.3 freigegeben wird. In dieser Kanalkonfiguration wird eine kombinierte Freigabe von nicht benachbarten Kanälen, und zwar den Kanälen 14.1 und 14.3, erreicht. Die verschiedenen, mittels des Satzes von Ausnehmungen 50, 52, 54 der Einstelleinheit 28 erreichbaren Kanalkonfigurationen sind in Figur 7 dargestellt. In der in Figur 2 gezeigten Drehposition des Grundkörpers 24 sind alle Kanäle 14 der Kanaleinheit 12 freigegeben, was einer maximalen Durchflussstufe 46a entspricht (siehe Figur 8).

Die anhand der schematischen Darstellung in Figur 3 beschriebenen Durchlassmittel 47 sind ebenfalls in Figur 2 zu erkennen. In dieser Ausführung sind die Durchlassmittel 47.1, 47.2, 47.3 jeweils als ein aus der als Drehkörper ausgebildeten Düseneinheit 30 ausgespartes Loch, welches eine Durchfließöffnung 48.1, 48.2 bzw. 48.3 festlegt, ausgebildet. Die Düseneinheit 30 ist in der Kanaleinheit 12 aufgenommen und erstreckt sich senkrecht zur Kanalrichtung 36. Die Düseneinheit 30 ist in einem Aufnahmebereich 62 drehbar gelagert, welcher in der Kanaleinheit 12 integriert ist. Dieser Aufnahmebereich 62 ist als Bohrung der Kanaleinheit 12 ausgebildet, bildet eine an der Seite 20 angeordnete Öffnung zum Einführen der Düseneinheit 30, überquert die als Bypasskanäle ausgebildeten Kanäle 14.1, 14.2, 14.3 und mündet in den als Hauptkanal ausgebildeten Kanal 14.4. Die Düseneinheit 30 weist außerdem ein Betätigungselement 64 auf, mittels dessen die Düseneinheit 30 zu einer Rotation relativ zur Kanaleinheit 12 angetrieben werden kann. Die Düseneinheit 30 umfasst ferner einen Teilbereich 66, welcher sich an das Betätigungselement 64 anschließt und hülsenförmig ausgebildet ist. Die Durchfließöffnungen 48.1, 48.2, 48.3 sind aus einer Wandung des Teilbereichs 66 ausgespart. Die Düseneinheit 30 weist ferner eine Abdichtungseinheit 68 auf, die dazu vorgesehen ist, die Kanäle 14.1, 14.2, 14.3 voneinander abzudichten. Die Abdichtungseinheit 68 umfasst einen Satz von Dichtungsringen 70, mittels welcher ein unerwünschtes Fließen von Gas von einem Kanal 14 zu einem benachbarten Kanal 14 vor dessen Durchlass durch die Durchfließöffnungen 48 verhindert werden kann. Der hülsenförmige Teilbereich 66 bildet einen Hohlraum 72, welcher im montierten Zustand der Düseneinheit 30 in den als Hauptkanal ausgebildeten Kanal-14.4 mündet und über welchen Gas nach einem Durchlass durch eine oder mehrere Durchfließöffnungen 48 in den Hauptkanal und zur Auslassöffnung (Figur 1) fließen kann. Der Hohlraum 72 dient als Sammelbereich, in dem Gasmengen, die aus den Durchfließöffnungen 48 fließen, sich zusammenschließen.

Ist z.B. der Kanal 14.1 mittels der Einstelleinheit 28 freigegeben, fließt Gas aus dem Hohlraum 26 des Grundkörpers 24 heraus und verteilt sich in diesem Kanal 14.1. Hierzu steht ein Raum zur Verteilung des Gases zur Verfügung, welcher von den beidseitig des Aufnahmebereichs 62 angeordneten Kanalteilen des Kanals 14.1 sowie von einem Teil des Aufnahmebereichs 62 zwischen dessen Innenwand und der Wandung der Düseneinheit 30 gebildet ist. Dieser Raum ist mittels eines der Dichtungsringe 70 abgedichtet. Dadurch kann ein Fließen des Gases in den benachbarten Kanal 14.2 verhindert werden. Zur Verhinderung eines Fließens von Gas aus der Kanaleinheit 12 bei der Verteilung von Gas in den Kanälen 14 sind ferner Sperrelemente 73 jeweils an einem Ende der Kanäle 14 angeordnet. Das Gas, welches im Kanal 14.1 sowie um die Wandung des Teilbereichs 66 der Düseneinheit 30 herum verteilt ist, kann durch die Durchfließöffnung 48.1 in den vom Teilbereich 66 gebildeten Hohlraum 72, anschließend in den als Hauptkanal ausgebildeten Kanal 14.4 und in die Auslassöffnung 18 fließen.

Die Düseneinheit 30 ist in einer perspektivischen Ansicht in Figur 6 dargestellt. Es sind das Betätigungselement 64 und der hülsenförmige Teilbereich 66 zu erkennen, aus welchem die als Löcher ausgebildeten und die Durchfließöffnungen 48 bildenden Durchlassmittel 47 ausgespart sind. Der Satz von vier Dichtungsringen 70, die jeweils in einem an die Wandung des Teilbereichs 66 angeformten Aufnahmemittel 74 angeordnet sind, legt im montierten Zustand der Düseneinheit 30 in der Kanaleinheit 12 drei Bereiche des Aufnahmebereichs 62 um den Teilbereich 66 herum fest, welche jeweils einem der Kanäle 14 entsprechen, voneinander isoliert sind und zur Verteilung von Gas nach dessen Durchlass durch den Grundkörper 24 zur Verfügung stehen.

Figur 7 zeigt in einer schematischen Darstellung verschiedene Kanalkonfigurationen der Kanaleinheit 12, die mittels einer Drehung des Grundkörpers 24 erreicht werden können. In Figur 7 ist ein gesperrter bzw. ein freigegebener Kanal 14 mittels eines hell bzw. dunkel gezeichneten Kreises dargestellt. Die Kanalkonfigurationen werden als Funktion eines als Drehwinkel α ausgebildeten Einstellwegparameters dargestellt. Jede gezeigte Kanalkonfiguration entspricht einer Durchflussstufe 46 der Einstellvorrichtung 10. Diese verschiedenen Durchflussstufen 46a bis 46h sind in einem in Figur 8 dargestellten Diagramm gezeigt, das der Kennlinie der Einstellvorrichtung 10 entspricht. In diesem Diagramm ist der Durchflusswert D des von der Einstellvorrichtung 10 bereitgestellten Durchflusses als Funktion des Drehwinkels α aufgetragen. Zur Zuordnung einer Kanalkonfiguration zu einem Drehwinkel α stellt der Winkel α₀ = 0° einen Referenzwinkel dar, welcher einer Ausschaltposition P_{A} des Grundkörpers 24 entspricht, in welcher alle Kanäle 14 der Kanaleinheit 12 vollständig gesperrt sind. Diese Ausschaltposition P_{A} kann einer Position des Grundkörpers 24 entsprechen, in der dieser an einem Begrenzungsmittel zur Begrenzung seiner Drehbewegung anliegt, wie z.B. an einem Anschlagelement. Ausgehend von dieser Ausshaltposition P_{A} kann der Bediener nach einem Anzünden des als Gasbrenner ausgebildeten Verbrauchers 11 den Grundkörper 24 mit Hilfe des Betätigungsmittels 22 gegen den Uhrzeigersinn drehen. Beim Erreichen einer Position Pₘₐₓ mit einem Drehwinkel α₁ = 80° werden alle Kanäle 14 der Kanaleinheit 12 durch die Kombinationen von Ausnehmungen 54.1, 54.2, 54.3, 54.4 freigegeben. Diese Kanalkonfiguration entspricht der maximalen Durchflussstufe 46a mit einem maximalen Durchflusswert Dₘₐₓ. Wird der Grundkörper 24 weiter gedreht, bleibt der Durchflusswert D konstant, bis der Drehwinkel α₂ = 138° erreicht ist. Die maximale Durchflussstufe 46a ist durch die Drehwinkel α₁, α₂ charakterisiert, zwischen welchen der Durchfilusswert D = Dₘₐₓ konstant ist. Anders formuliert ist in der maximalen Durchflussstufe 46a der Durchflusswert D über das Intervall [α₁, α₂] konstant. Beim Erreichen des Drehwinkels α₂ wird der als Hauptkanal ausgebildete Kanal 14.4 durch die Wandung des Grundkörpers 24 vollständig gesperrt, wodurch der Durchflusswert D auf eine weitere Durchflussstufe 46b reduziert wird. Diese Durchflussstufe 46b ist wiederum durch ein Drehwinkelintervall [α₂, α₃] charakterisiert, wobei α₃ = 167° ist. Bei α = α₃ wird der als Bypasskanal ausgebildete Kanal 14.1 gesperrt, wodurch eine weitere Reduzierung des Durchflusswerts D erreicht wird. Bei den Drehwinkeln α₄ = 197° und α₅ = 224° entspricht die jeweilige Kanalkonfiguration einer Kombination von jeweils zwei als Bypasskanälen ausgebildeten Kanälen 14.1, 14.2 bzw. 14.3. In den Kanalkonfigurationen bei α₆ = 254°, α₇ = 281°, α₈ = 309° werden die Kanäle 14.1, 14.2, 14.3 jeweils einzeln angesteuert. Eine Position Pₘᵢₙ des Grundkörpers 24 bei α = α₈ entspricht der einzelnen Freigabe des Kanals 14.1, in welchem das Durchlassmittel 47.1, das den kleinsten Durchmesser aufweist (siehe Figur 6), angeordnet ist. Hiermit entspricht diese Position Pₘᵢₙ einer minimalen Durchflussstufe 46h mit einem Durchflusswert D = Dₘᵢₙ.

Zusammenfassend wird der Durchflusswert D von der maximalen Durchflussstufe 46a (Dₘₐₓ) bis zur minimalen Durchflussstufe 46h (Dₘᵢₙ) entlang des Drehwegs des Grundkörpers 24 stufenweise reduziert. Durch ein Zusammenwirken der Einstelleinheit 28 und der Kanaleinheit 12 kann zwischen acht Durchflussstufen 46a bis 46h mittels einer Rotation des Grundkörpers 24 stufenweise umgeschaltet werden. Bei einem stufenweisen Übergang von einer Durchflussstufe 46 zu einer nächsten Durchflussstufe 46 werden einer oder mehrere Kanäle vollständig gesperrt oder vollständig freigegeben. Ausgehend von der Ausschaltposition P_{A} ist der Grundkörper 24 bis zur Position Pₘᵢₙ der minimalen Durchflussstufe 46h um einen Winkel von zumindest 309° drehbar. Die Position Pₘₐₓ der maximalen Stufe 46a und die Position Pₘᵢₙ der minimalen Stufe 46h-bilden-einen-Drehwinkelbereich von 229°.

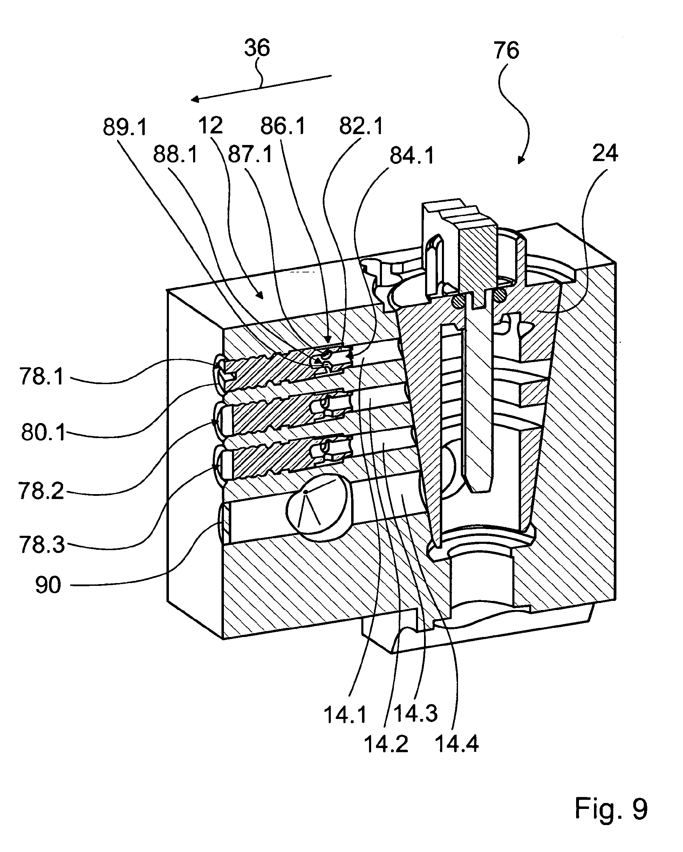

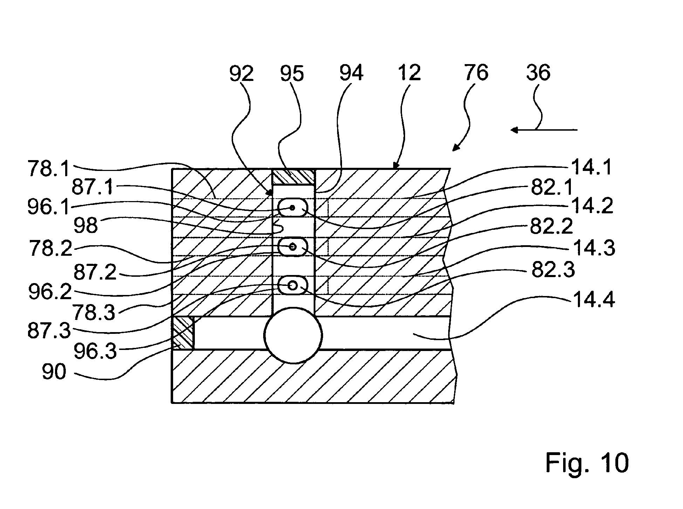

Figur 9 zeigt eine weitere Ausführung einer Einstellvorrichtung 76 in einer Schnittansicht. Bauteile, die in Bezug auf das oben beschriebene Ausführungsbeispiel eine gleiche Funktion aufweisen, werden mit dem gleichen Bezugszeichen bezeichnet. Die Einstellvorrichtung 76 ist mit einem Satz von drei Düseneinheiten 78.1, 78.2, 78.3 versehen, die jeweils in einem der als Bypasskanäle ausgebildeten Kanäle 14.1, 14.2, 14.3 drehbar gelagert sind. Die Düseneinheiten 78 sind jeweils über ihre Länge in einem Kanal 14 angeordnet und erstrecken sich in Kanalrichtung 36. Außerdem umfassen die Düseneinheiten 78 jeweils ein Betätigungselement 80, mittels dessen sie zu einer Rotation relativ zur Kanaleinheit 12 antreibbar sind. An ihrem dem Grundkörper 24 zugewandten Ende weisen die Düseneinheiten 78 jeweils einen Teilbereich 82 auf, welcher hülsenförmig ausgebildet ist. Die Axialrichtung des Teilbereichs 82 entspricht der Kanalrichtung 36. Der Teilbereich 82 bildet einen Hohlraum 84, durch welchen Gas bei der Freigabe des jeweiligen Kanals 14 fließen kann. Aus der Wandung des hülsenförmigen Teilbereichs 82 ist ein Satz von als Löcher ausgebildeten Durchlassmitteln 86, 88 ausgespart. Die Löcher sind in Reihe in Umfangsrichtung des Teilbereichs 82 angeordnet und bilden Durchfließöffnungen 87, 89 gleichen Durchmessers. Die Durchfließöffnungen 87.1, 87.2, 87.3 der verschiedenen Düseneinheiten 78.1, 78.2 bzw. 78.3 weisen jeweils einen unterschiedlichen Durchmesser auf (siehe Figur 10), der einen Gasdurchfluss im entsprechenden Kanal 14.1, 14.2 bzw. 14.3 festlegt. Der Kanal 14.4 ist ferner an einem dem Grundkörper 24 gegenüberliegenden Ende mittels eines Sperrelements 90 zur Verhinderung eines Fließens von Gas aus der Kanaleinheit 12 gesperrt.

Figur 10 zeigt die Kanaleinheit 12 der Einstellvorrichtung 76 in einer zweidimensionalen Schnittansicht. Die Schnittebene schneidet die Kanaleinheit 12 im Gegensatz zu Figur 9 vor den Kanälen 14.1, 14.2, 14.3, so dass diese mittels gestrichelter Linien dargestellt sind. Zu erkennen ist der als Hauptkanal ausgebildete Kanal 14.4, der aus der Kanaleinheit 12 ausgespart ist und mit der Auslassöffnung 18 (Figur 1) verbunden ist. Aus der Kanaleinheit 12 ist ferner ein Hohlraum 92 ausgespart. Er weist einen Grundbereich 94 auf, welcher sich senkrecht zur Kanalrichtung 36 erstreckt und in den als Hauptkanal ausgebildeten Kanal 14.4 mündet. Im Hohlraum 92 ist ferner ein Sperrelement 95 angeordnet, welches ein Fließen von Gas aus der Kanaleinheit 12 durch die obere Öffnung des Hohlraums 92 verhindert.

Die als Bypasskanäle ausgebildeten Kanäle 14.1, 14.2, 14.3 sind ferner mit dem Hohlraum 92 über Öffnungen 96.1, 96.2, 96.3 einer Innenwandung 98 des Hohlraums 92 verbunden. Im montierten Zustand der Düseneinheiten 78 in den Kanälen 14 sind die hülsenförmigen Teilbereiche 82 jeweils im Bereich einer der Öffnungen 96 angeordnet, so dass eine der Durchfließöffnungen 87, 89 jeweils in den Hohlraum 92 mündet. In der in Figur 10 dargestellten Konfiguration münden die Durchfließöffnungen 87.1, 87.2, 87.3 in den Hohlraum 92. Bei Freigabe eines der Kanäle 14.1, 14.2, 14.3 fließt Gas vom Grundkörper 24 über den jeweiligen Kanal 14, den Hohlraum 84 der jeweiligen Düseneinheit 78 und die jeweilige Durchfließöffnung 87 in den Hohlraum 92. Der Hohlraum 92 ist daher als Sammelbereich ausgebildet, in dem Gasmengen, die aus den freigegebenen Kanälen 14.1, 14.2, 14.3 fließen, sich zusammenschließen.

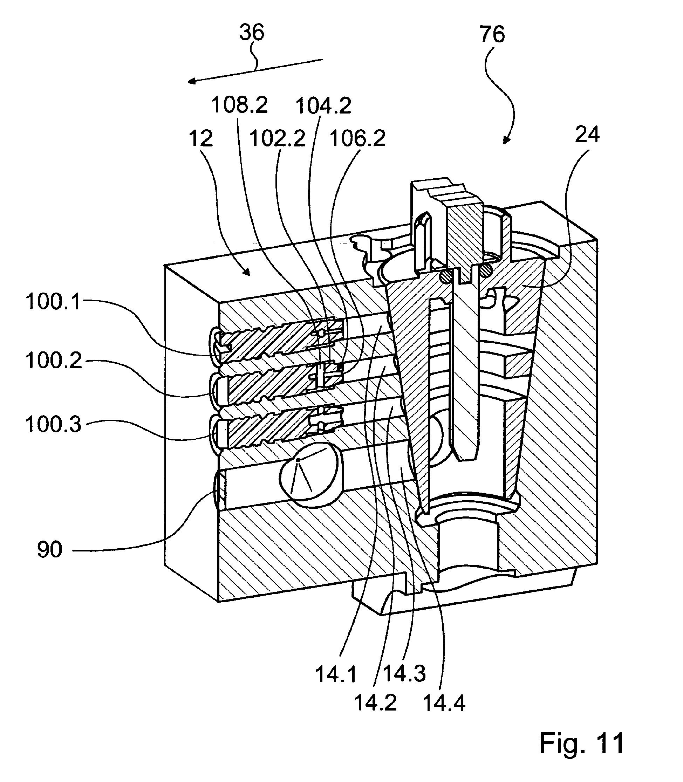

In Figur 11 ist eine weitere Ausführung der Einstellvorrichtung 76 dargestellt. In diesem Ausführungsbeispiel ist die Einstellvorrichtung 76 mit einem Satz von alternativen Düseneinheiten 100 versehen. Die Düseneinheiten 100 weisen jeweils einen hülsenförmigen Teilbereich 102 auf, der einen als Durchlassmittel 104 ausgeführten Hohlraum bildet. Die Durchlassmittel 104.1, 104.2, 104.3 legen eine Durchfließöffnung 106.1, 106.2 bzw. 106.3 zum Fließen von Gas fest, die jeweils einen unterschiedlichen Durchmesser aufweisen. Aus dem hülsenförmigen Teilbereich 102 ist ferner jeweils ein Kanal 108 ausgespart, welcher die als Hohlraum ausgebildeten Durchlassmittel 104 überquert. Ist z.B. der Kanal 14.2 durch die Einstelleinheit 28 freigegeben, fließt Gas vom Hohlraum 26 des Grundkörpers 24 in den Kanal 14.2 und durch die Durchfließöffnung 106.2 in das als Hohlraum ausgebildete Durchlassmittel 104.2. Das Gas fließt über den Kanal 108.2 aus dem Durchlassmittel 104.2 heraus, verteilt sich um den hülsenförmigen Teilbereich 102.2 herum und mündet über die Öffnung 96.2 (siehe Figur 10) in den Hohlraum 92.

In einem weiteren Ausführungsbeispiel ist denkbar, dass die Einstellvorrichtung 10 oder 76 zur Bereitstellung eines Gasdurchflusses für zwei verschiedene Verbraucher vorgesehen ist. Dadurch kann die Einstellvorrichtung 10 bzw. 76 vorteilhaft bei einem Zweikreis-Brenner eingesetzt werden. Die Einstellvorrichtung 10 bzw. 76 ist in dieser Konfiguration mit zwei Auslassöffnungen 18 zum Ausfluss von Gas versehen, wobei jeweils ein Satz von Kanälen einer Auslassöffnung zugeordnet ist. Der Grundkörper 24 weist dann vorteilhafterweise einer Geometrie auf, die eine Ansteuerung beider Sätze ermöglicht.

Es ist in einer weiteren Ausführungsvariante denkbar, dass der Grundkörper 24 mittels eines Motors, insbesondere mittels eines Schrittmotors, zur Drehung angetrieben wird. Durch die genauen und einfach reproduzierbaren Durchflussstufen sowie aufgrund des großen Drehwinkelbereichs des Grundkörpers 24 können durch die Motorisierung eine besonders hohe Präzision und ein hoher Bedienkomfort einfach erreicht werden.

### Bezugszeichen

- 10: Einstellvorrichtung
- 11: Verbraucher
- 12: Kanaleinheit
- 14: Kanal
- 16: Einlassöffnung
- 18: Auslassöffnung
- 20: Seite
- 22: Führungselement
- 24: Grundkörper
- 26: Hohlraum
- 28: Einstelleinheit
- 30: Düseneinheit
- 32: Einlassrichtung
- 34: Auslassrichtung
- 36: Kanalrichtung
- 38: Hülsenaxialrichtung
- 40: Aufnahmebereich
- 42: Innenwandung
- 44: Gasstrom
- 46: Durchflussstufe
- 47: Durchlassmittel
- 48: Durchfließöffnung
- 50: Ausnehmung
- 52: Ausnehmung
- 54: Ausnehmung
- 58: Ausnehmungssatz
- 60: Hülsenumfangsrichtung
- 62: Aufnahmebereich
- 64: Betätigungselement
- 66: Teilbereich
- 68: Abdichtungseinheit
- 70: Dichtungsring
- 72: Hohlraum
- 73: Sperrelement
- 74: Aufnahmemittel
- 76: Einstellvorrichtung
- 78: Düseneinheit
- 80: Betätigungselement
- 82: Teilbereich
- 84: Hohlraum
- 86: Durchlassmittel
- 87: Durchfließöffnung
- 88: Durchlassmittel
- 89: Durchfließöffnung
- 90: Sperrelement
- 92: Hohlraum
- 94: Grundbereich
- 95: Sperrelement
- 96: Öffnung
- 98: Innenwandung
- 100: Düseneinheit
- 102: Teilbereich
- 104: Durchlassmittel
- 106: Durchfließöffnung
- 108: Kanal
- E: Drehwinkelbereich
- α: Drehwinkel
- D: Durchflusswert
- Dₘₐₓ: Durchflusswert
- Dₘᵢₙ: Durchflusswert
- P_{A}: Ausschaltposition
- Pₘᵢₙ: Position
- Pₘₐₓ: Position

## Patentansprüche

1. Einstellvorrichtung, insbesondere Gashahnvorrichtung, zur Einstellung eines Durchflusses eines fließfähigen Stoffs, mit einer Kanaleinheit (12), die zumindest zwei Kanäle (14.1, 14.2, 14.3, 14.4) zum Durchfließen des Stoffs aufweist, und einem relativ zur Kanaleinheit (12) beweglich gelagerten Grundkörper (24), der dazu dient, zur Bereitstellung einer Durchflussstufe (46a - 46e) die Kanäle (14.1, 14.2, 14.3, 14.4) in Kombination anzusteuern, **dadurch gekennzeichnet, dass** der Grundkörper (24) eine Einstelleinheit (28) aufweist, die dazu vorgesehen ist, zumindest zwei Kanäle (14.1, 14.2, 14.3) jeweils einzeln zur Bereitstellung jeweils einer Durchflussstufe (46f - 46h) anzusteuern.

2. Einstellvorrichtung nach Anspruch 1, **dadurch gekennzeichnet, dass** die Kanaleinheit (12) einen Satz von zumindest vier Kanälen (14.1, 14.2, 14.3, 14.4) aufweist und die Einstelleinheit (28) im Zusammenwirken mit der Kanaleinheit (12) dazu vorgesehen ist, zumindest sechs positive Durchflussstufen (46a - 46h) bereitzustellen.

3. Einstellvorrichtung nach Anspruch 1 oder 2, **dadurch gekennzeichnet, dass** der Grundkörper (24) hülsenförmig ausgebildet ist.

4. Einstellvorrichtung nach Anspruch 3, **dadurch gekennzeichnet, dass** die Einstelleinheit (28) zumindest einen Ausnehmungssatz (58.1, 58.2, 58.3) aufweist, der mehrere in Hülsenumfangsrichtung (60) einander folgende Ausnehmungen (50, 52, 54) umfasst, die aus dem Grundkörper (24) ausgespart sind.

5. Einstellvorrichtung nach Anspruch 3 oder 4, **dadurch gekennzeichnet, dass** die Einstelleinheit (28) mehrere Ausnehmungssätze (58.1, 58.2, 58.3) aufweist, die jeweils einem Kanal (14.1, 14.2, 14.3) der Kanaleinheit (12) zugeordnet sind.

6. Einstellvorrichtung nach einem der Ansprüche 3 bis 5, **dadurch gekennzeichnet, dass** der Grundkörper (24) zumindest zwei Ausnehmungssätze (58.1, 58.2, 58.3) aufweist, die in Hülsenaxialrichtung (38) hintereinander angeordnet sind.

7. Einstellvorrichtung nach einem der vorhergehenden Ansprüche, **dadurch gekennzeichnet, dass** der Grundkörper (24) zwischen einer Ausschaltposition (P_{A}) und zumindest einer einen Durchfluss zulassenden Position (Pₘᵢₙ) drehbar gelagert ist, die einen Winkel (α₈) von zumindest 270° bilden.

8. Einstellvorrichtung nach einem der vorhergehenden Ansprüche, **dadurch gekennzeichnet, dass** der Grundkörper (24) zwischen einer ersten, einer maximalen Durchflussstufe (46a) entsprechenden Position (Pₘₐₓ) und einer zweiten, einer minimalen Durchflussstufe (46h) entsprechenden Position (Pₘᵢₙ) drehbar gelagert ist, die einen Drehwinkelbereich von zumindest 200° bilden.

9. Einstellvorrichtung nach einem der vorhergehenden Ansprüche, **gekennzeichnet durch** einen zur Aufnahme des Grundkörpers (24) vorgesehenen Aufnahmebereich (40), der zumindest teilweise einstückig mit der Kanaleinheit (12) ausgebildet ist.

10. Einstellvorrichtung nach einem der vorhergehenden Ansprüche, **gekennzeichnet durch** eine Düseneinheit (30; 78; 100) zum Festlegen zumindest einer Durchfließöffnung (48; 87, 89; 106) für den Stoff, die als eine auswechselbare, von der Kanaleinheit (12) trennbare Einheit ausgebildet ist.

11. Einstellvorrichtung nach einem der vorhergehenden Ansprüche, **gekennzeichnet durch** eine einstückige Düseneinheit (30), die zum Festlegen zumindest einer Durchfließöffnung (48.1, 48.2, 48.3) für den Stoff in zumindest zwei Kanälen (14.2, 14.2, 14.3) vorgesehen ist.

12. Gaskochvorrichtung mit einer Einstellvorrichtung nach einem der vorhergehenden Ansprüche.

## Claims

1. Setting device, particularly gas cock device, for setting a throughflow of a flowable substance, with a channel unit (12), which has at least two channels (14.1, 14.2, 14.3, 14.4) for the throughflow of the substance, and a base body (24), which is mounted to be movable relative to the channel unit (12) and which serves the purpose of activation control of the channels (14.1, 14.2, 14.3, 14.4) in combination for provision of a throughflow step (46a - 46e), **characterised in that** the base body (24) comprises a setting unit (28) provided for the purpose of activation control of at least two channels (14.1, 14.2, 14.3) respectively individually for provision of each throughflow step (46f - 46h).

2. Setting device according to claim 1, **characterised in that** the channel unit (12) comprises a set of at least four channels (14.1, 14. 2, 14.3, 14.4) and the setting unit (28) is provided for the purpose in co-operation with the channel unit (12) of providing at least six positive throughflow steps (46a - 46h).

3. Setting device according to claim 1 or 2, **characterised in that** the base body (24) is formed to be sleeve-shaped.

4. Setting device according to claim 3, **characterised in that** the setting unit (28) comprises at least one recess set (58.1, 58.2, 58.3) comprising several recesses (50, 52, 54) which follow one another in sleeve circumferential direction (60) and which are cut out of the base body (24).

5. Setting device according to claim 3 or 4, **characterised in that** the setting unit (28) comprises several recess sets (58.1, 58.2, 58.3) which are each associated with a respective channel (14.1, 14.2, 14.3) of the channel unit (12).

6. Setting device according to any one of claims 3 to 5, **characterised in that** the base body (24) comprises at least two recess sets (58.1, 58.2, 58.3) which are arranged one behind the other in sleeve axial direction (38).

7. Setting device according to any one of the preceding claims, **characterised in** the base body (24) is mounted to be rotatable between a switch-off position (P_{A}) and at least one position (Pₘᵢₘ) allowing a throughflow, the positions forming an angle (αₛ) of at least 270°.

8. Setting device according to any one of the preceding claims, **characterised in that** the base body (24) is mounted to be rotatable between a first position (Pₘₐₓ) corresponding with the maximum throughflow step (46a) and a second position (Pₘᵢₙ) corresponding with a minimum throughflow step (46h), the positions forming a rotational angle range of at least 200°.

9. Setting device according to any one of the preceding claims, **characterised by** a receiving region (40) which is provided for reception of the base body (24) and which is formed at least in part integrally with the channel unit (12).

10. Setting device according to any one of the preceding claims, **characterised by** a nozzle unit (30; 78; 100) for fixing at least one throughflow opening (48; 87, 89; 106) for the substance, which unit is constructed as an exchangeable unit separable from the channel unit (12).

11. Setting device according to any one of the preceding claims, **characterised by** an integral nozzle unit (30) which is provided for fixing at least one throughflow opening (48.1, 48.2, 48.3) for the substance in at least two channels (14.2, 14.2, 14.3).

12. Gas cooking equipment with a setting device according to any one of the preceding claims.

## Revendications

1. Dispositif de réglage, notamment dispositif de robinet à gaz, pour le réglage d'un débit d'une matière fluide, comprenant une unité à canaux (12), qui présente au moins deux canaux (14.1, 14.2, 14.3, 14.4) pour l'écoulement de la matière, et un corps de base (24) logé de manière déplaçable par rapport à l'unité à canaux (12), lequel corps de base sert, pour la mise à disposition d'un niveau de débit (46a - 46e), à piloter en combinaison les canaux (14.1, 14.2, 14.3, 14.4), **caractérisé en ce que** le corps de base (24) présente une unité de réglage (28) qui est ménagée pour piloter au moins deux canaux (14.1, 14.2, 14.3) respectivement individuellement pour la mise à disposition de respectivement un niveau de débit (46f - 46 h).

2. Dispositif de réglage selon la revendication 1, **caractérisé en ce que** l'unité à canaux (12) présente un jeu d'au moins quatre canaux (14.1, 14.2, 14.3, 14.4) et **en ce que** l'unité de réglage (28), en agissant avec l'unité à canaux (12), est ménagée pour mettre à disposition au moins six niveaux de débit positifs (46a - 46h).

3. Dispositif de réglage selon la revendication 1 ou 2, **caractérisé en ce que** le corps de base (24) est réalisé en forme de douille.

4. Dispositif de réglage selon la revendication 3, **caractérisé en ce que** l'unité de réglage (28) présente au moins un jeu d'évidements (58.1, 58.2, 58.3) qui comprend plusieurs évidements (50, 52, 54) se succédant en direction circonférentielle de douille (60), lesquels sont évidés à partir du corps de base (24).

5. Dispositif de réglage selon la revendication 3 ou 4, **caractérisé en ce que** l'unité de réglage (28) présente plusieurs jeux d'évidements (58.1, 58.2, 58.3) qui sont respectivement attribués à un canal (14.1, 14.2, 14.3, 14.4) de l'unité à canaux (12).

6. Dispositif de réglage selon l'une quelconque des revendications 3 à 5, **caractérisé en ce que** le corps de base (24) présente au moins deux jeux d'évidements (58.1, 58.2, 58.3) qui sont disposés les uns derrière les autres en direction axiale de douille (38).

7. Dispositif de réglage selon l'une quelconque des revendications précédentes, **caractérisé en ce que** le corps de base (24) est logé de manière rotative entre une position d'arrêt (P_{A}) et au moins une position (Pₘᵢₙ) permettant un débit, lesquelles forment un angle (α₈) d'au moins 270°.

8. Dispositif de réglage selon l'une quelconque des revendications précédentes, **caractérisé en ce que** le corps de base (24) est logé de manière rotative entre une première position (Pₘₐₓ) correspondant à un niveau de débit maximal (46a) et une deuxième position (Pₘᵢₙ) correspondant à un niveau de débit minimal (46h), lesquelles forment une zone d'angle de rotation d'au moins 200°.

9. Dispositif de réglage selon l'une quelconque des revendications précédentes, **caractérisé par** une zone de logement (40) ménagée pour le logement du corps de base (24), laquelle est réalisée au moins en partie d'une seule pièce avec l'unité à canaux (12).

10. Dispositif de réglage selon l'une quelconque des revendications précédentes, **caractérisé par** une unité à tuyères (30 ; 78 ; 100) destinée à déterminer un orifice d'écoulement (48 ; 87, 89 ; 106) pour la matière, lequel est réalisé en tant qu'une unité interchangeable, séparable de l'unité à canaux (12).

11. Dispositif de réglage selon l'une quelconque des revendications précédentes, **caractérisé par** une unité à tuyères (30) d'une seule pièce, qui est ménagée pour déterminer au moins un orifice d'écoulement (48.1, 48.2, 48.3) pour la matière dans au moins deux canaux (14.1, 14.2, 14.3)

12. Dispositif de cuisson à gaz comprenant un dispositif de réglage selon l'une quelconque des revendications précédentes.
